# EUROPÄISCHE PATENTANMELDUNG

(11) **EP 2 166 310 A1**
(43) Veröffentlichungstag der Anmeldung: **24.03.2010**
(21) Anmeldenummer: 09166794.9
(22) Anmeldetag: 30.07.2009
(51) Int. Cl.: G01C 21/34, G01C 21/36

(54) **Navigationsvorrichtung und Verfahren hierfür**

(30) Priorität: 23.09.2008 DE 102008042279
(71) Anmelder: Robert Bosch GmbH, 70442 Stuttgart (DE)
(72) Erfinder: Herget, Kay, 37603, Holzminden (DE)

(57) **Zusammenfassung**

Die Erfindung betrifft eine Navigationsvorrichtung (1) mit einer Anzeigeeinheit (2) zur Kartendarstellung und/oder Signalausgabe und mit zumindest einem Bedienelementen (3) zum Bedienen der Navigationsvorrichtung, wobei zur Anzeige und/oder Routenplanung und/oder Zielführung Kartendaten verwendet sind, die vorzugsweise in einem ersten Speicher (4) gespeichert sind, wobei Zusatzdaten in einem zweiten Speicher oder einem separaten Bereich des ersten Speichers (6) gespeichert sind. Die Erfindung betrifft weiterhin ein Verfahren hierfür.

## Beschreibung

### Technisches Gebiet

Die Erfindung betrifft eine Navigationsvorrichtung nach dem Oberbegriff von Anspruch 1 und ein Verfahren hierfür nach dem Oberbegriff von Anspruch 5. Dabei ist das Verfahren besonders geeignet zur Nutzung und/oder Verwaltung von Zusatzdaten oder Zusatzinhalten einer Navigationsvorrichtung.

### Stand der Technik

Insbesondere bei Navigationsvorrichtungen werden heute nicht nur reiner Kartendaten, die Straßen und Orte enthalten, zur Darstellung, Routenplanung oder Zielführung verwendet, sondern es werden auch anderweitige sonstige Zusatzinformationen genutzt. Beispielsweise werden auch Verkehrsinformationen angezeigt, wie Geschwindigkeitsbeschränkungen etc. Eine weitere Kategorie von zusätzlichen Informationen als Zusatzdaten sind sogenannte Punkte des Interesses, auch POI genannt, welche beispielsweise Hotels, Tankstellen Restaurants, kulturelle Veranstaltungsorte etc. repräsentieren.

Beispielsweise ist es zweckmäßig, wenn man eine Tankstelle in der näheren Umgebung sucht, dass man diese über die Auswahl einer Tankstelle in den POI herausfinden und suchen lässt. Dies vermeidet unnötiges Suchen und führt zu einer nächstgelegenen Tankstelle, wobei durchaus auch eine spezielle Gruppe von Tankstelle auswählbar ist. Man spart insgesamt Zeit und erreicht die Tankstelle auch entspannter, weil man nicht so lange vergeblich suchen muss.

Die Punkte des Interesses sind daher von besonderer Bedeutung für die Funktion und die Bedienung von Navigationsvorrichtungen.

Heute werden die in Navigationsvorrichtungen verwendeten Daten typischer Weise von verschiedenen Lieferanten angeboten bzw. verwendet, wobei der Umfang der jeweils verfügbaren Zusatzdaten, wie der Punkte des Interesses (POIs) durchaus beschränkt ist und auch von Anbieter zu Anbieter variieren kann. Der Endkunde bzw. Nutzer erhält jedoch die Zusatzdaten typischer Weise mit Kauf der Navigationsvorrichtung zusammen mit den Kartendaten und kann hier nicht gesondert auswählen.

Darüber hinaus gibt es bei im Markt erhältlichen Navigationsvorrichtungen derzeit keine oder eine sehr begrenzte Möglichkeit für den Nutzer bzw. Bediener der Navigationsvorrichtung individuelle Zusatzdaten zu ergänzen. Allerdings ist es bei manchen Herstellern von Navigationsvorrichtungen möglich, ein Nachladen von POIs in Gruppen durchzuführen. Diese Daten werden jedoch kommerziell angeboten und sind für den Nutzer/Bediener oft zu teuer und auch nur von geringer Brauchbarkeit, wobei er ggf. durchaus Interesse an einer Teilmenge dieser Daten hätte, die jedoch für sich nicht separierbar ist, weil diese Daten nur als Paket verkauft werden. Der Nutzer als Endkunde kann sich somit keine eigenen individuellen POIs erstellen, bzw. muss dies einzeln und umständlich über das Menü der Navigationsvorrichtung tun.

Durch das steigende Aufkommen von mobilen Navigationsvorrichtungen werden immer mehr Nutzer auf solche Vorrichtungen aufmerksam und erwerben und nutzen diese Vorrichtungen. Entsprechend steigt auch die Anzahl der individuell nachgefragten Zusatzinhalte, wie beispielsweise solche für Wohnmobilfahrer, mit Daten über Campingplätze oder mit Reiseführer-Daten. Dabei werden diese Zusatzdaten direkt bei der Kompilierung mit den übrigen Kartendaten mit auf die von der Navigationsvorrichtung verwendeten Navigations-CD bzw. -DVD geschrieben.

Es findet damit bereits eine beschränkende Vorauswahl der POIs statt. Der Nutzer als Endkunde kann jedoch nicht individuell entscheiden, welche zusätzlichen POIs er neben den ohnehin vorhandenen POI bzw. Kartendaten möchte und welche dann entsprechend auf dem Datenträger gespeichert und für die spätere Verwendung durch die Navigationsvorrichtung verfügbar sein sollen.

### Darstellung der Erfindung: Aufgabe, Lösung, Vorteile

Es ist die Aufgabe der Erfindung, eine Navigationsvorrichtung und ein Verfahren hierfür zu schaffen, welche bzw. welches dem Nutzer oder Bediener die Möglichkeit einräumt, die von ihm verwendeten Daten, wie insbesondere Zusatzdaten, individuell zu gestalten und insbesondere auch Zusatzdaten hinzuzufügen.

Dies wird erreicht mit den Merkmalen von Anspruch 1, wonach eine Navigationsvorrichtung geschaffen wird mit einer Anzeigeeinheit zur Kartendarstellung und/oder Signalausgabe und mit zumindest einem Bedienelementen zum Bedienen der Navigationsvorrichtung, wobei zur Anzeige und/oder Routenplanung und/oder Zielführung Kartendaten verwendet sind, die vorzugsweise in einem ersten Speicher gespeichert sind, wobei Zusatzdaten in einem zweiten Speicher gespeichert sind. Dadurch wird es erfindungsgemäß Vorteilhaft neben den Kartendaten die Zusatzdaten individuell und unabhängig von den Kartendaten zusammenzustellen, wobei dadurch auch eine Verteilung von solchen Daten unabhängig von den Kartendaten erfolgen kann.

Dabei kann der zweite Speicher ein externer, wechselbarer Speicher sein. Alternativ können die Zusatzdaten aber auch in einem separaten Bereich des ersten internen Speichers gespeichert sein. Die Übertragung der Daten von einer externen Quelle, z.B. von einem PC, geschieht dann über eine Kabel-Verbindung, wie zum Beispiel über eine USB-Schnittstelle, oder über eine Luftschnittstelle, wie beispielsweise über eine Bluetooth-Schnittstelle oder über eine GPRS-Verbindung (Mobiltelefonie).

Dabei ist es besonders vorteilhaft, wenn die Zusatzdaten separat verwaltet, d.h. gespeichert und/oder bearbeitet werden können, um so die Austauschbarkeit mit anderen Zusatzdaten-Besitzern, etc zu ermöglichen.

Auch ist es vorteilhaft, wenn die Zusatzdaten Punkte des Interesses (POI) umfassen.

Bezüglich des Verfahrens wird die erfindungsgemäße Aufgabe erreicht indem ein Verfahren zum Betrieben einer Navigationsvorrichtung geschaffen wird, wobei Kartendaten und/oder Zusatzdaten zur Anzeige, Routenberechnung und/oder Zielführung verwendet werden, wobei die Zusatzdaten von einem Benutzer individuell zusammenstellbar sind.

Dabei ist es vorteilhaft, wenn die Zusatzdaten ausgewählt zusammenstellbar sind, wobei zumindest einzelne Zusatzdaten individuell editierbar sind und/oder aus bereits anderweitig vorhandenen Datensätzen zusammenstellbar sind.

Besonders vorteilhaft ist es, wenn die individuell editierbaren Zusatzdaten mittels einer Eingabemaske beispielsweise an einem PC mit einem dafür vorgesehenen Programm, wie PC-Tool, zusammenstellbar sind.

Vorteilhaft ist es, wenn die Zusatzdaten zumindest einen Punkt des Interesses (POI) umfassen.

Auch ist es insbesondere vorteilhaft, wenn eine Auswahl von Startpunkten, Zwischenzielen und/oder Zielen durch Eingabe einer Adresse, durch Auswahl von einem Punkt des Interesses oder durch Auswahl aus einer Karte erfolgt.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer Navigationsvorrichtung,
- Fig. 2: eine schematische Darstellung der Datenzusammenstellung für eine Navigationsvorrichtung,
- Fig. 3: eine Darstellung der Erstellung und Verwertung von Punkten des Interesses,
- Fig. 4: eine Darstellung einer Eingabemaske zur Erstellung von Punkten des Interesses,
- Fig. 5: eine Darstellung einer Tabelle zur Erstellung bzw. Auswahl von Punkten des Interesses,
- Fig. 6: ein Blockschaltbild zur Erläuterung der Erfindung,
- Fig. 7: ein Blockschaltbild zur Erläuterung der Erfindung,
- Fig. 8: ein Blockschaltbild zur Erläuterung der Erfindung,
- Fig. 9: ein Blockschaltbild zur Erläuterung der Erfindung,
- Fig. 10: ein Blockschaltbild zur Erläuterung der Erfindung,
- Fig. 11: ein Blockschaltbild zur Erläuterung der Erfindung,
- Fig. 12: ein Blockschaltbild zur Erläuterung der Erfindung,
- Fig. 13: ein Blockschaltbild zur Erläuterung der Erfindung,
- Fig. 14: ein Blockschaltbild zur Erläuterung der Erfindung,
- Fig. 15: ein Blockschaltbild zur Erläuterung der Erfindung,
- Fig. 16: ein Blockschaltbild zur Erläuterung der Erfindung,
- Fig. 17: ein Blockschaltbild zur Erläuterung der Erfindung,
- Fig. 18: ein Blockschaltbild zur Erläuterung der Erfindung,
- Fig. 19: ein Blockschaltbild zur Erläuterung der Erfindung,
- Fig. 20: ein Blockschaltbild zur Erläuterung der Erfindung,
- Fig. 21: ein Blockschaltbild zur Erläuterung der Erfindung,

- Fig. 22: ein Blockschaltbild zur Erläuterung der Erfindung,
- Fig. 23: ein Blockschaltbild zur Erläuterung der Erfindung,
- Fig. 24: ein Blockschaltbild zur Erläuterung der Erfindung,
- Fig. 25: ein Blockschaltbild zur Erläuterung der Erfindung,
- Fig. 26: ein Blockschaltbild zur Erläuterung der Erfindung,
- Fig. 27: ein Blockschaltbild zur Erläuterung der Erfindung,
- Fig. 28: ein Blockschaltbild zur Erläuterung der Erfindung,
- Fig. 29: ein Blockschaltbild zur Erläuterung der Erfindung, und
- Fig. 30: ein Blockschaltbild zur Erläuterung der Erfindung.

### Bevorzugte Ausführung der Erfindung

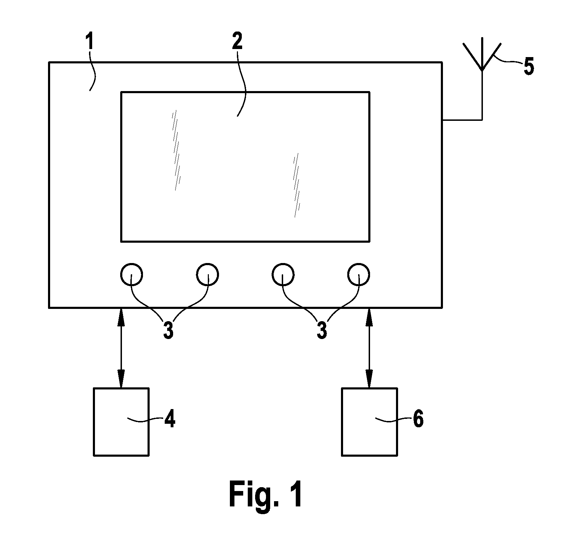

Die Figur 1 zeigt schematisch eine Navigationsvorrichtung 1 mit einer Anzeigeeinheit 2, wie Display, zumindest einem Bedienelement 3, wie Taste, Schieber etc. und mit einem Datenspeicher 4. Der Datenspeicher 4 dient der Speicherung und der zur Verfügung Stellung von Kartendaten für die Routenplanung, Anzeige, Routendarstellung, Routenauswahl und Zielführung. Der Speicher kann ein externer Speicher, der die Daten enthält, sein. Auch ist es alternativ möglich, dass die Zusatzdaten entweder auf einem externen Speicher oder auf einem separaten Bereich des internen Speichers gespeichert werden, wobei die Navigationsvorrichtung eine Steuereinheit mit internem Arbeitsspeicher enthält, wobei sie typischer Weise aktuell benutzte Daten in einen Arbeitsspeicher speichert. Die Kartendaten enthalten beispielsweise die Daten der Straßen und Wege von Städten und/oder Ländern. Darüber hinaus verfügt die Navigationsvorrichtung 1 über eine Empfangsvorrichtung 5, wie zumindest eine Antenne, zum Empfang von Satellitendaten zur aktuellen eigenen Positionsbestimmung. Durch die Positionsbestimmung und anhand der Kartendaten kann dann eine Zielführung durchgeführt werden.

Erfindungsgemäß verfügt die Navigationsvorrichtung 1 über einen weiteren Speicher 6, welcher Punkte des Interesses enthält, die von der Navigationsvorrichtung genutzt werden können. Dieser weitere Speicher 6 ist vorzugsweise ein externer wechselbarer Speicher.

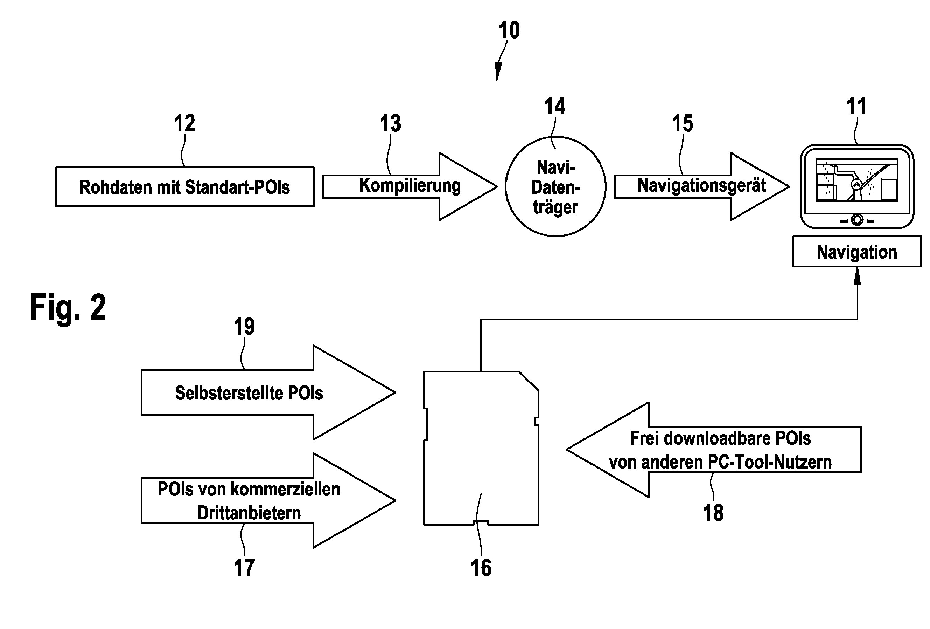

Die Figur 2 zeigt schematisch ein Diagramm 10 zur Datenzusammenstellung für eine Navigationsvorrichtung 11. Die Rohdaten der Kartendaten werden mit Standard-Punkten des Interesses POIs versehen, siehe Block 12, und zusammen kompiliert, siehe Block 13 und auf einem Datenträger bzw. Speicher 14 zur Verwendung in einer Navigationsvorrichtung 11 bereitgestellt, siehe Block 15. Darüber hinaus werden weitere Punkte des Interesses POI auf einem Datenträger/Speicher 16, wie auf einer Speicherkarte, zusammengestellt und gespeichert. Diese zusätzlichen Daten von Punkten des Interesses POI können entweder von kommerziellen Drittanbietern erhalten werden, siehe 17, und/oder von anderen Nutzern oder Anbietern beispielsweise aus dem Internet herunter geladen, siehe 18, und hinzugefügt werden. Weiterhin können diese Daten von Punkten des Interesses auch selbst erstellt und zusammengestellt werden, siehe 19. Auf dem Datenträger 16 werden diese Daten zusammengestellt und der Navigationsvorrichtung 11 zur Verwendung bereitgestellt, welches diese Daten mit einbezieht und zur Anzeige, Routenberechnung oder Zielführung etc. verwendet.

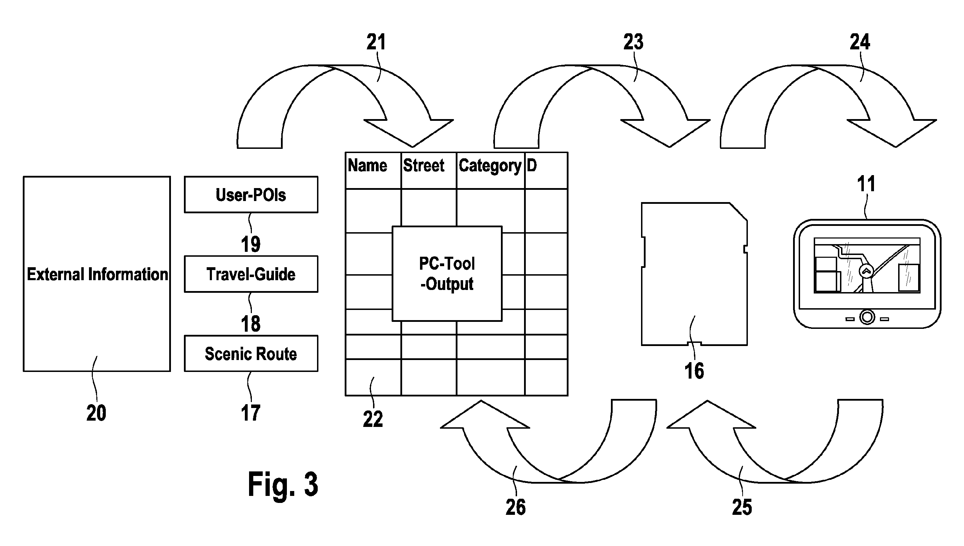

Die Figur 3 zeigt eine schematische Zusammenstellung der Punkte des Interesses beispielsweise durch den Nutzer bzw. Bediener. Dabei kann der Nutzer bzw. Bediener in Block 20 eine externe Zusatzinformation zusammenstellen. Diese kann beispielsweise aus zumindest einem Punkt des Interesses 19 bestehen, der von dem Nutzer bzw. Bediener erzeugt wird bzw. wurde. Auch kann beispielsweise ein Punkt des Interesses aus einem Reiseführer, siehe 18, oder aus einer als besonderes reizvoll bezeichneten Strecke von einem kommerziellen Anbieter gewählt werden, siehe 17.

Diese Daten der Punkte des Interesses werden bei Pfeil 21 mittels eines Verfahrens 22, wie eines Computerprogramms bzw. PC-Tools, erzeugt und/oder zusammengestellt. Anschließend werden die Daten auf einen Datenträger 16 gespeichert, siehe 23, und können damit in der Navigationsvorrichtung 11 verwendet werden, siehe 24. Darüber hinaus können die Daten der Navigationsvorrichtung 11 auch auf dem Datenträger 16 gespeichert werden, siehe 25, und von dem Bediener oder Nutzer verwendet, versandt oder bearbeitet werden, siehe 26.

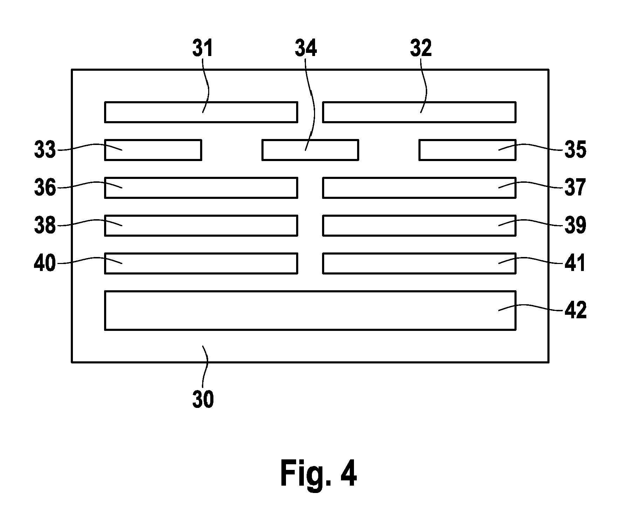

Die Figur 4 zeigt eine Maske 30 zur Erstellung und/oder Bearbeitung eines Punktes des Interesses (POI). Dabei wird bei 31 der Name des POI abgefragt bzw. er kann damit editiert und auch wieder geändert werden. Bei Block 32 kann eine beispielsweise thematische Kategorie des POI eingegeben werden. Dabei kann beispielsweise auch aus einer zuvor vorgegebenen Auswahl ausgewählt werden. In Block 33 kann der Ort des POI eingegeben werden. In Block 34 kann die Postleitzahl PLZ des POI eingegeben werden. In Block 35 kann die Lage des POI aus einer Karte ausgewählt werden. Bei Block 36 kann die Straße zu dem POI eingegeben werden, wobei bei Block 37 die Hausnummer des POI eingegeben werden kann. Bei Block 38 kann eine Telefonnummer zu dem POI eingegeben werden. Bei Block 39 kann ein Bild oder ein Film o.ä. als Datei verknüpft werden, die zuvor beispielsweise auf einem verfügbaren Speicher gespeichert wurde. In Block 40 kann eine Audio-Datei verknüpft werden, die zuvor beispielsweise auf einem verfügbaren Speicher gespeichert wurde. In Block 41 können Satellitenortungsdaten, wie GPS-Koordinaten oder -daten, eingegeben und gespeichert werden. In Block 42 kann zu dem POI ein Text oder eine Bemerkung editiert und gespeichert werden.

Im Folgenden wird anhand von Eingabemenüs die erfindungsgemäße Erstellung von Punkten des Interesses erläutert und dessen Nutzung durch entsprechende Navigationsvorrichtungen. Der Nutzer, Bediener oder Endkunde kann sich dabei sehr einfach selbst Punkte des Interesses POI erstellen und diese unabhängig von der benutzten Navigationsvorrichtung 1,11 auf einem Datenträger 6,16 speichern.

Eine mögliche Anwendung ist beispielsweise bei dem Handlungsreisende zu finden, der am Vorabend die Kunden für den nächsten Tag in einer POI-Kategorie "Kundenbesuche Dienstag" speichert und er kann diese zuvor erstellten POI dann sehr einfach in der Navigationsvorrichtung als Ziele oder Zwischenziele aus- und anwählen.

Ein anderes Fallbeispiel wäre die Urlaubsrecherche: Ein Kunde möchte beispielsweise Berlin besuchen und er informiert sich vorher über verschiedene Medien, wie Reiseführer, Gespräche mit Freunden, Internet etc., was er in Berlin besichtigen möchte. Diese Punkte des Interesses POI sammelt er über eine Eingabemaske eines PC-Tools, z. B. in einer Kategorie "Wochenend-Trip Berlin" und er kann diese POIs anschließend sehr einfach an die Navigationsvorrichtung übermitteln und die Punkte des Interesses mittels Zielführung ansteuern.

Kommerzielle Anbieter, wie etwa Reiseführeranbieter oder auch Unternehmen mit mehreren Niederlassungen könnten damit sehr einfach ihre Inhalte oder Niederlassungen an der Eingabemaske des PC- Tools als POI erstellen und für die Verwendung in Navigationsvorrichtungen auf Datenträgern 6,16 speichern.

Diese Datenträger, wie beispielsweise SD-Karten, oder auch nur die Daten als Datei, die unabhängig von einem Datenträger ist, könnten von diesen Anbietern dann selbstständig verteilt oder vertrieben werden und der Kunde hat beispielsweise die freie Wahl, welchen Reiseführer er zum Beispiel für eine Städtereise nutzen und dessen POIs herunter laden möchte. Damit würde für die Navigationsvorrichtung die oben beschriebene Vorauswahl der POIs entfallen und es würde gleichzeitig eine verbesserte Kundenfreundlichkeit geschaffen, da der Kunde selbst entscheidet, welche Daten von welchem Anbieter er bevorzugt und zu nutzen beabsichtigt.

Ein weiterer Anwendungsfall ist beispielsweise das Stadtmarketingbüro oder ein Tourismus-Dienstleister. Diese Unternehmen könnten mit der erfindungsgemäßen Lösung die POIs ihrer Stadt oder in einem vorgegebenen regionalen Gebiet über die Eingabemaske eines PC-Tools auch ohne technische Vorkenntnisse erstellen und vermarkten.

Durch die separate Speicherung dieser Zusatz-POIs sind diese physisch beweglich, d.h. sie können ausgetauscht und übertragen werden, wie beispielsweise per Bluetooth, E-Mail o.ä. und auch versendet werden oder zum Herunterladen auf einer Internet-Seite bereitgestellt werden.

Die oben beschriebenen erfindungsgemäßen Anwendungen zeigen, dass individuell erstellte Punkte des Interesses POI mit einer Navigationsvorrichtung genutzt werden können und dass diese Punkte des Interesses POI entweder individuell erstellt werden können oder vorab auch kommerziell erstellt und verteilt werden können, wobei dabei vorzugsweise der Endnutzer wiederum daraus eine individuelle Auswahl treffen kann.

Die POIs können auf einem Datenträger gespeichert werden, der verkauft oder auch kostenlos verteilt werden könnte, wobei die Daten aber auch zum Herunterladen beispielsweise im Internet zur Verfügung gestellt werden können. Neben den kommerziellen Anbietern können so auch Privatpersonen ihre individuellen eigenen POIs erstellen und beispielsweise Freunden, Verwandten oder auch der Internet-Community zur Verfügung stellen. Dies kann einerseits in bereits vorhandenen Internet 2.0-Portalen geschehen, wie zum Beispiel gemäß myspace.com, youtube.com, friendster, meine-stadt.de, etc. Unabhängig davon oder alternativ dazu kann aber auch ein entsprechendes Portal aufgebaut werden, auf dem kommerzielle und nicht kommerzielle POI-Listen angeboten und von diesem heruntergeladen und ausgetauscht werden können.

Der Besitzer einer Navigationsvorrichtung kann sich für seine eigene Navigationsvorrichtung individuell seine POIs zusammenstellen und diese je nach Bedarf auch speichern und auch wieder löschen bzw. zu anderen Navigationsvorrichtungen übertragen.

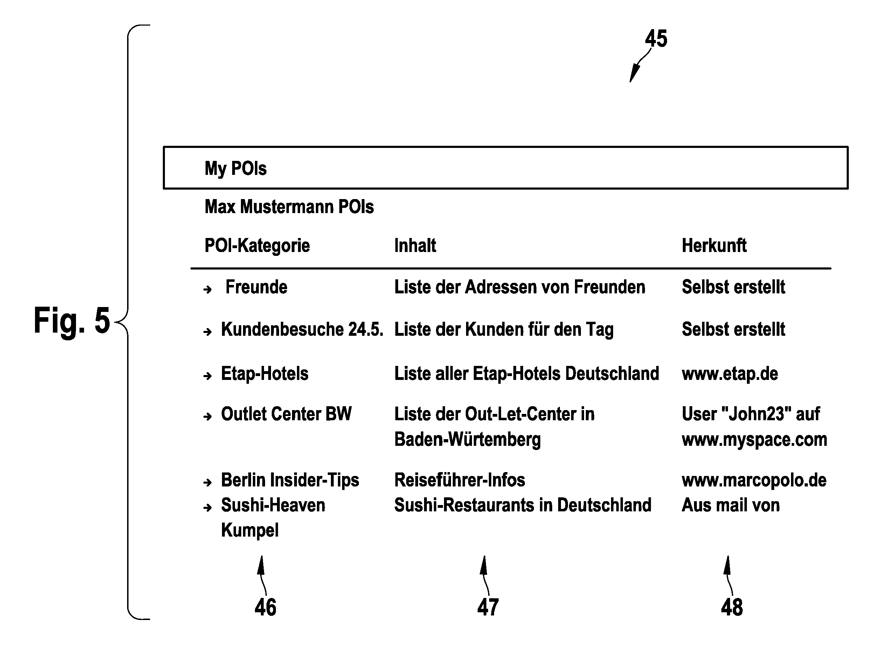

Eine Eingabemaske kann die Zusammenstellung an einem PC mittels eines entsprechenden PC-Tools erlauben und durch das Sammeln von POIs aus verschiedenen Quellen kann eine eigene Datenbank von POI erzeugt werden, die den eigenen Interessen gerecht wird. Eine exemplarische Liste individueller POI-Kategorien zeigt die Figur 5.

Die Figur 5 zeigt beispielsweise eine Auflistung 45 von Punkten des Interesses POI für eine Beispielperson Max Mustermann. Dabei ist in der ersten Spalte 46 die Kategorie der jeweiligen Punkte des Interesses POI aufgelistet. In Spalte 47 sind die Inhalte aufgelistet, beispielsweise eine Liste von Adressen von Freunden, von Kunden, Geschäften, Reiseführerinformationen etc. In Spalte 48 ist die Herkunft des POI angegeben.

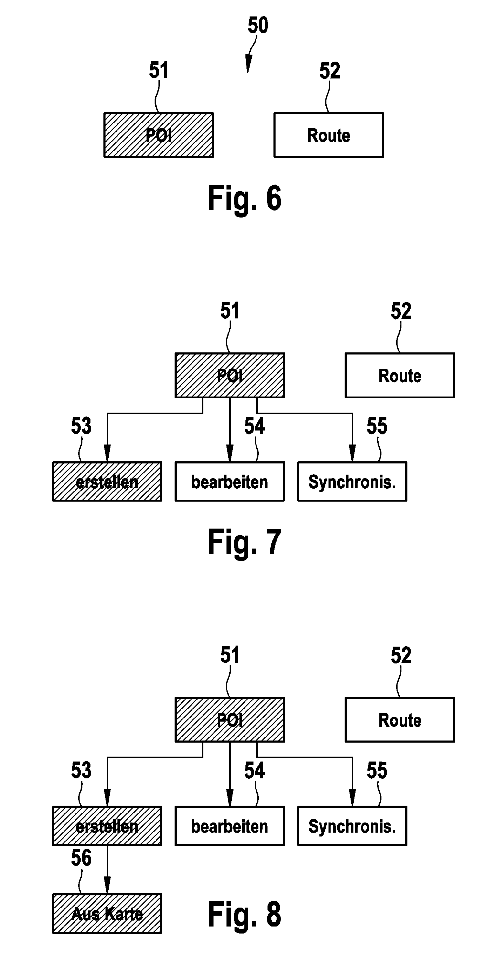

Die Figur 6 zeigt schematisch die Auswahl eines Menüs 50 zur Bearbeitung bzw. Anwendung von Punkten des Interesses POI. In Block 51 kann die Bearbeitung eines POI ausgewählt werden und in Block 52 kann eine Route ausgewählt oder bearbeitet werden.

Die Figur 7 zeigt schematisch die Auswahl von Block 51, bei welcher die Unterblöcke 53,54 und 55 geöffnet werden. In Block 53 kann ein POI erstellt werden, in Block 54 kann ein vorhandener POI bearbeitet werden und in Block 55 kann ein POI synchronisiert werden.

Die Figur 8 zeigt schematisch die Auswahl von Block 53, bei welcher der Unterblock 56 geöffnet wird. In Block 56 wird abgefragt, ob ein POI aus einer Karte entnommen werden soll.

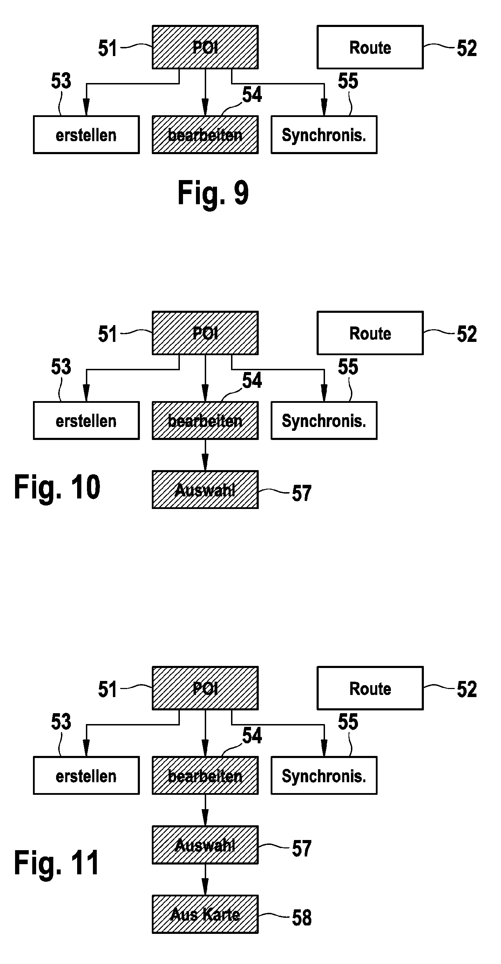

Die Figur 9 zeigt schematisch die Auswahl von Block 54 zur Bearbeitung eines POI. Die Figur 10 zeigt schematisch die Auswahl von Block 54 zur Bearbeitung eines POI, bei welcher der Unterblock 57 geöffnet wird. In Block 57 wird eine Auswahl abgefragt, welcher POI bearbeitet werden soll. Die Figur 11 zeigt schematisch die Auswahl von Block 57 zur Auswahl einer Bearbeitung eines POI, bei welcher der Unterblock 58 geöffnet wird. In Block 58 wird eine Auswahl eines POI aus einer Karte abgefragt.

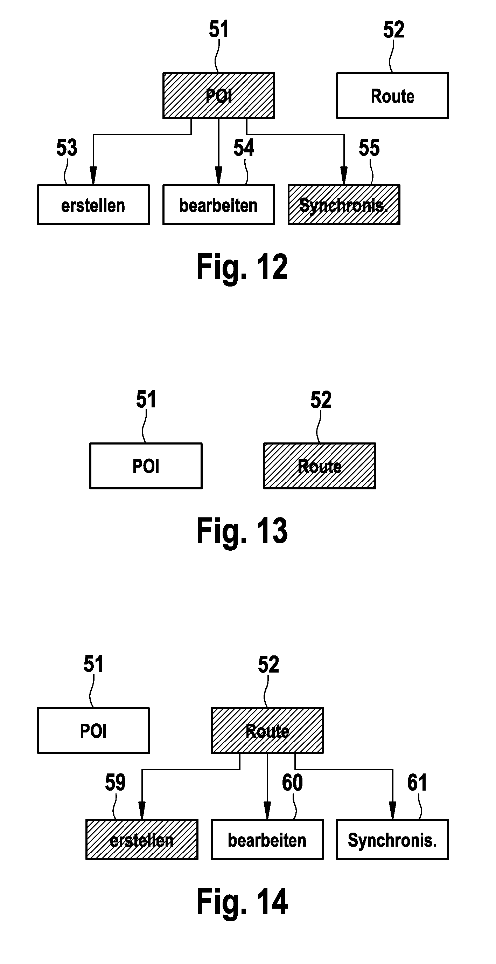

Die Figur 12 zeigt schematisch die Auswahl von Block 55 zur Synchronisierung der POIs oder von zumindest einem POI.

Die Figur 13 zeigt schematisch die Auswahl von Block 52 zur Routenberechnung. Die Figur 14 zeigt schematisch die Auswahl von Block 52 zur Routenberechnung, bei welcher die Unterblöcke 59,60,61 geöffnet werden. In Block 59 kann eine Route erstellt werden, in Block 60 kann eine vorhandene Route bearbeitet werden und in Block 61 kann eine Route synchronisiert werden.

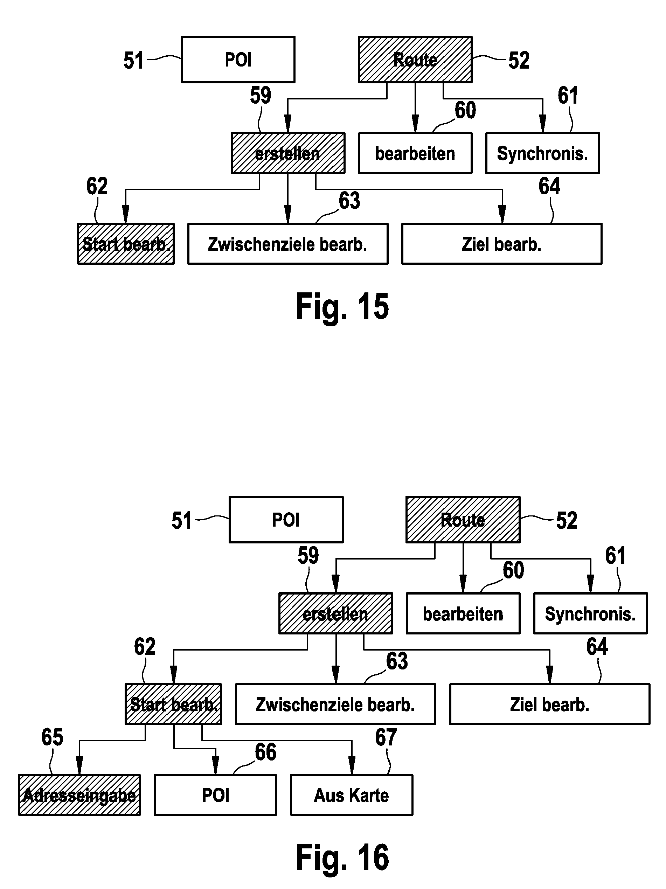

Die Figur 15 zeigt die Auswahl des Blocks 59, bei welcher die Unterblöcke 62,63,64 geöffnet werden. In Block 62 kann der Startpunkt einer Route definiert oder bearbeitet werden, in Block 63 können Zwischenziele definiert oder bearbeitet werden und in Block 64 kann der Zielpunkt einer Route definiert oder bearbeitet werden.

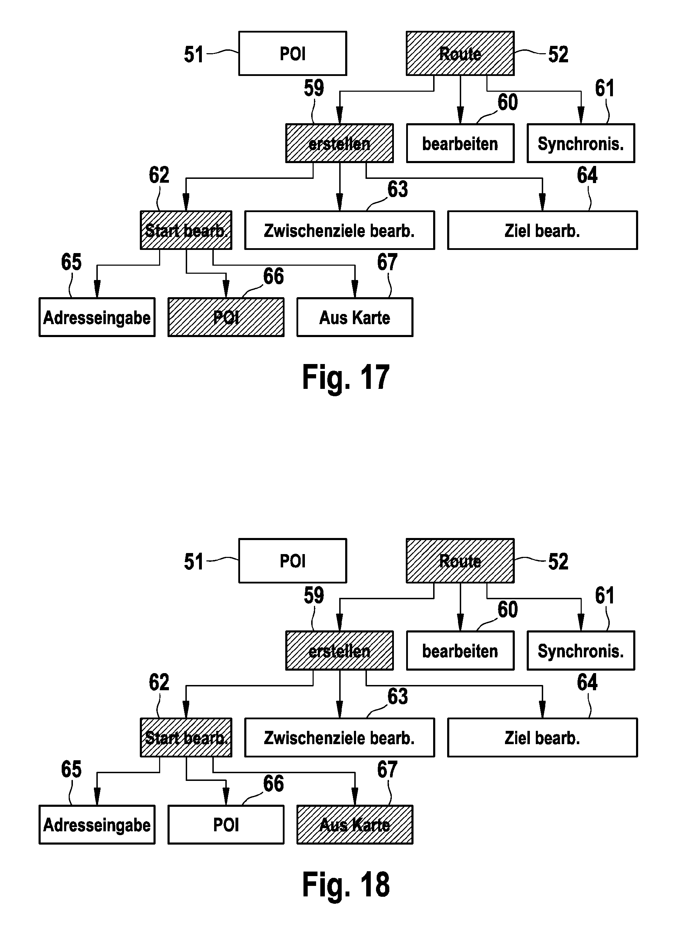

Die Figur 16 zeigt die Auswahl des Blocks 62, bei welcher die Unterblöcke 65,66,67 geöffnet werden. In Block 65 kann eine Adresseingabe des Startpunkts einer Route eingegeben oder bearbeitet werden, in Block 66 kann ein Punkt des Interesses POI als Startpunkt ausgewählt werden und in Block 67 kann der Startpunkt aus einer Karte ausgewählt werden. In Figur 16 ist die Adresseingabe aktiviert, so dass sich ein Menü zur Eingabe der Adresse des Startpunkts öffnen wird, so dass der Bediener die Adresse des Startpunkts eingeben kann. In Figur 17 ist die Definition des Startpunkts über eine POI-Eingabe aktiviert, so dass sich ein Menü zur Auswahl eines POI zur Definition des Startpunkts öffnen wird, so dass der Bediener einen POI als Startpunkt auswählen kann. In Figur 18 wird die Definition des Startpunkts der Routenplanung über eine Auswahl aus einer Karte aktiviert, siehe 67, so dass eine Karte angezeigt wird und mit einem Zeiger eine Auswahl eines Startpunktes erfolgen kann.

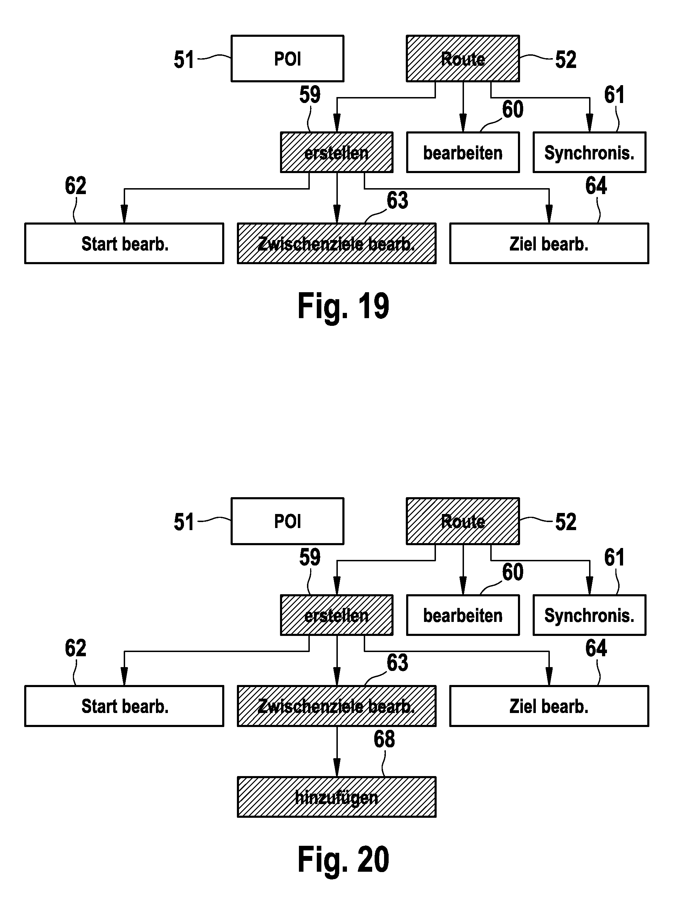

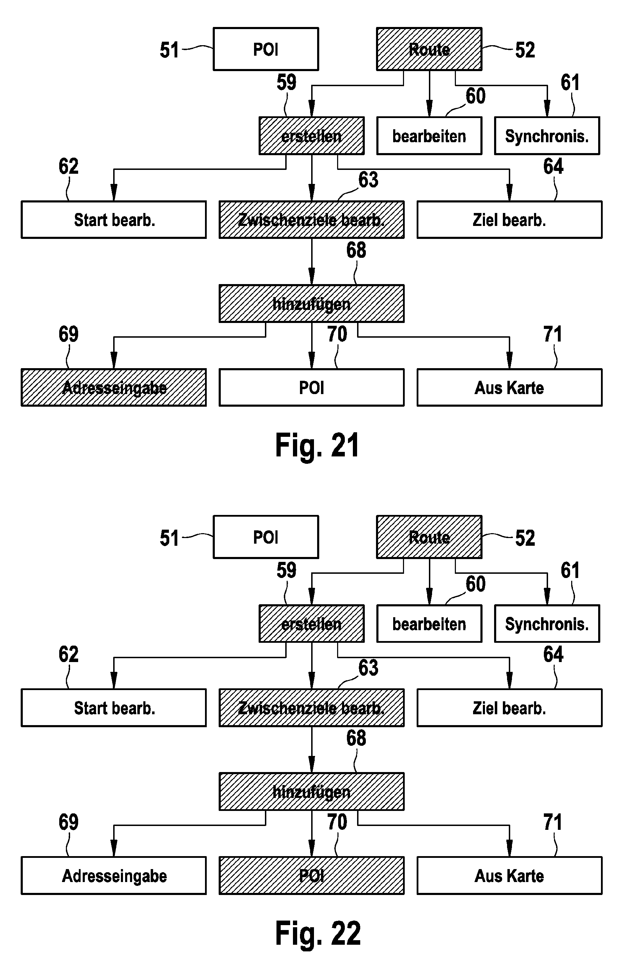

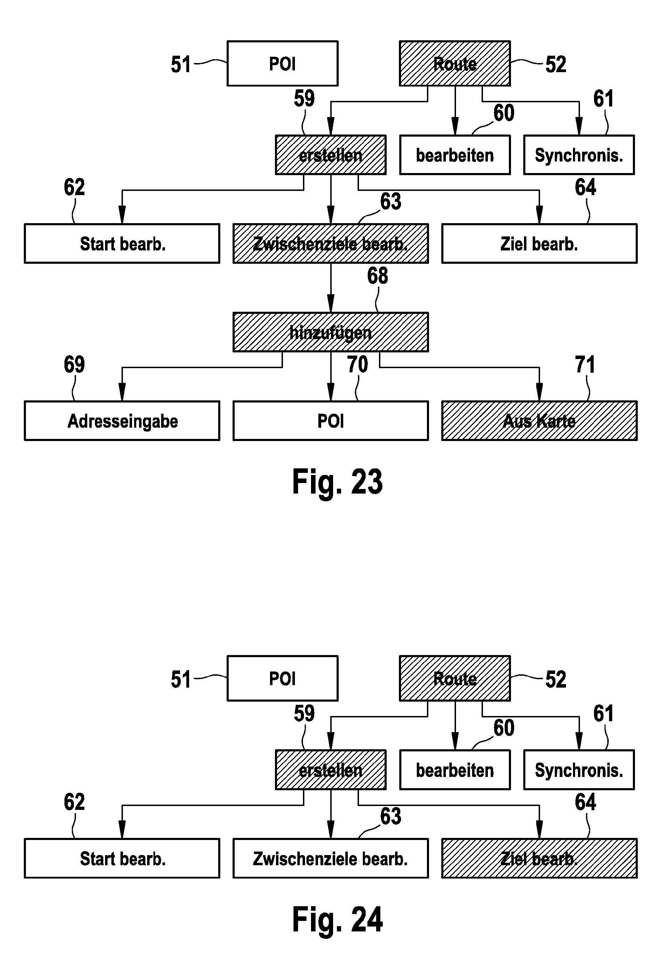

Die Figur 19 zeigt eine Auswahl des Blocks 63 zur Auswahl einer Zwischenziels bzw. dessen Bearbeitung. In Figur 20 ist zu erkennen, dass ein Block 68 geöffnet wird, mit welchem abgefragt wird, ob ein Zwischenziel hinzugefügt werden soll. Wird dies bestätigt, so ist wie in Figur 21 zu erkennen, eine Auswahl eines Zwischenziels durch eine Adresseingabe gemäß Block 69, durch eine POI-Eingabe gemäß Block 70 und eine Auswahl aus einer Karte gemäß Block 71 möglich. In Figur 21 ist Block 69 aktiviert, so dass eine Auswahl durch Adresseingabe in eine Eingabemaske erfolgen kann. In Figur 22 ist Block 70 aktiviert, so dass eine Auswahl eines Zwischenziels durch Auswahl eines Punktes des Interesses erfolgen kann. In Figur 23 ist Block 71 aktiviert, so dass eine Auswahl eines Zwischenziels durch Auswahl eines Punktes aus einer Karte erfolgen kann.

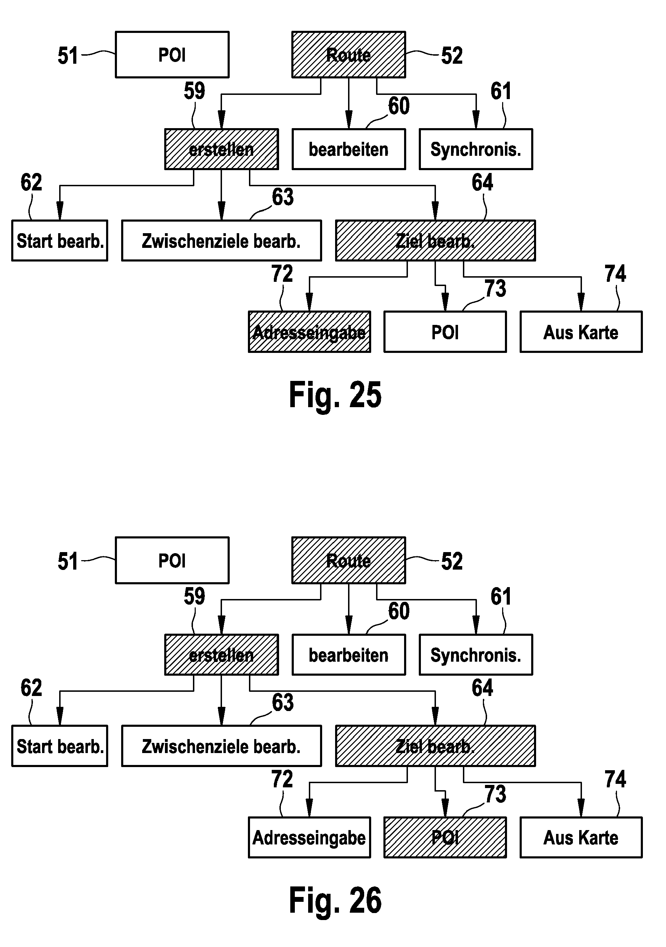

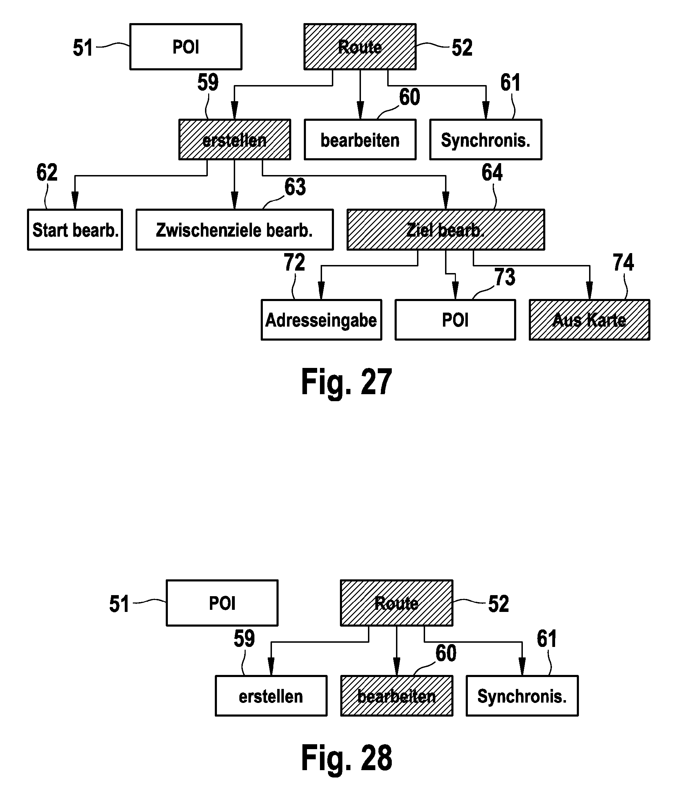

Die Figur 24 zeigt eine Auswahl des Blocks 64 zur Auswahl des Ziels bzw. dessen Bearbeitung. In Figur 25 ist zu erkennen, dass ein Block 72 geöffnet wird, so dass eine Auswahl des Ziels durch eine Adresseingabe erfolgen kann. Dabei kann eine Adresseingabe in eine Eingabemaske erfolgen. In Figur 26 ist Block 73 aktiviert, so dass eine Auswahl eines Zwischenziels durch Auswahl eines Punktes des Interesses erfolgen kann. In Figur 27 ist Block 74 aktiviert, so dass eine Auswahl eines Zwischenziels durch Auswahl eines Punktes aus einer Karte erfolgen kann.

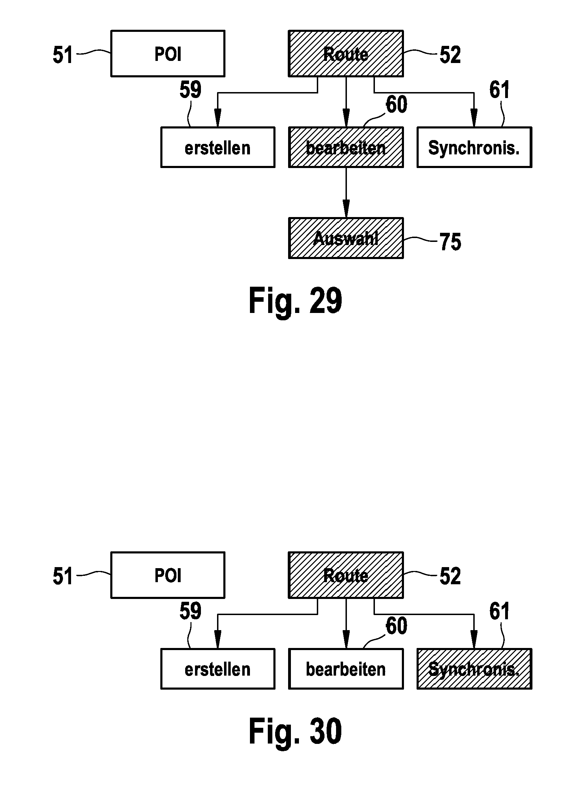

In Figur 28 ist Block 60 aktiviert, wonach eine Route bearbeitet werden kann, die beispielsweise bereits zuvor mit Startpunkt, Zwischenzielen und Ziel editiert wurde. Dazu wird in Figur 29 eine Abfrage aktiviert, eine spezifische Route zur Bearbeitung auszuwählen.

In Figur 30 wird die Route in Block 61 synchronisiert.

Alternativ zur Verwaltung und zur Benutzung bzw. zum Austausch von Zusatzdaten, welche weiter oben beispielhaft als POI beschrieben sind, können auch andere Daten entsprechend gespeichert, verwaltet und getuscht bzw. verteilt werden. Solche Daten können beispielsweise auch Routendaten sein, die zuvor editiert oder zusammengestellt wurde, wie beispielsweise eine besondere Fahrtstrecke, eine schöne Motorradstrecke etc.

## Patentansprüche

1. Navigationsvorrichtung (1) mit einer Anzeigeeinheit (2) zur Kartendarstellung und/oder Signalausgabe und mit zumindest einem Bedienelementen (3) zum Bedienen der Navigationsvorrichtung, wobei zur Anzeige und/oder Routenplanung und/oder Zielführung Kartendaten verwendet sind, die vorzugsweise in einem ersten Speicher (4) gespeichert sind, **dadurch gekennzeichnet, dass** Zusatzdaten in einem zweiten Speicher oder einem separaten Bereich des ersten Speichers (6) gespeichert sind.

2. Navigationsvorrichtung (1) nach Anspruch 1, **dadurch gekennzeichnet, dass** der erste (4) Speicher und/oder der zweite Speicher (6) ein externer wechselbarer Speicher ist oder die Zusatzdaten separat verwaltet, d.h. gespeichert, vertrieben, und/oder versendet etc. werden können.

3. Navigationsvorrichtung (1) nach Anspruch 2, **dadurch gekennzeichnet, dass** der erste Speicher (4) und/oder der zweite Speicher (6) ein interner Geräte-Speicher, wie Flash oder HDD, eine Speicherkarte, eine CD oder eine DVD ist.

4. Navigationsvorrichtung nach einem der vorhergehenden Ansprüche, **dadurch gekennzeichnet, dass** die Zusatzdaten Punkte des Interesses (POI) oder Routendaten umfassen.

5. Verfahren zum Betreiben einer Navigationsvorrichtung nach einem der vorhergehenden Ansprüche, **dadurch gekennzeichnet, dass** Kartendaten und/oder Zusatzdaten zur Anzeige, Routenberechnung und/oder Zielführung verwendet werden, wobei die Zusatzdaten von einem Benutzer individuell zusammenstellbar sind.

6. Verfahren nach Anspruch 5, **dadurch gekennzeichnet, dass** die Zusatzdaten ausgewählt zusammenstellbar sind, wobei zumindest einzelne Zusatzdaten individuell editierbar sind und/oder aus bereits anderweitig vorhandenen Datensätzen zusammenstellbar sind.

7. Verfahren nach Anspruch 6, **dadurch gekennzeichnet, dass** die individuell editierbaren Zusatzdaten mittels einer Eingabemaske zusammenstellbar sind.

8. Verfahren nach einem der vorhergehenden Ansprüche, **dadurch gekennzeichnet, dass** die Zusatzdaten zumindest einen Punkt des Interesses (POI) umfassen.

9. Verfahren nach einem der vorhergehenden Ansprüche, **dadurch gekennzeichnet, dass** eine Auswahl von Startpunkten, Zwischenzielen und/oder Zielen durch Eingabe einer Adresse, durch Auswahl von einem Punkt des Interesses oder durch Auswahl aus einer Karte erfolgt.
